**Europäisches Patentamt**

**European Patent Office**

**Office européen des brevets**

(19)

(11) Numéro de publication : **0 323 291 B1**

(12) # FASCICULE DE BREVET EUROPEEN

(45) Date de publication du fascicule du brevet :
**06.05.92 Bulletin 92/19**

(51) Int. Cl.$^5$ : **G01D 5/245,** H03M 1/30, H01H 19/00

(21) Numéro de dépôt : **88403074.3**

(22) Date de dépôt : **05.12.88**

(54) **Générateur de consigne pour la commande de position d'une pièce, notamment un ouvrant coulissant de véhicule automobile.**

(30) Priorité : **17.12.87 FR 8717648**

(43) Date de publication de la demande :
**05.07.89 Bulletin 89/27**

(45) Mention de la délivrance du brevet :
**06.05.92 Bulletin 92/19**

(84) Etats contractants désignés :
**DE ES GB IT SE**

(56) Documents cités :
**EP-A- 0 037 192
DE-A- 2 550 068
DE-A- 2 757 593
DE-A- 2 902 683
GB-A- 997 854
GB-A- 2 001 467
GB-A- 2 057 213**

(73) Titulaire : **ROCKWELL AUTOMOTIVE BODY SYSTEMS-FRANCE EN ABREGE:ROCKWELL ABS-FRANCE
Tour Gan Cédex 13
F-92082 Paris La Defense 2 (FR)**

(72) Inventeur : **Periou, Pierre
15, les Boccages Bruns
F-95000 Cergy Pontoise (FR)**

(74) Mandataire : **Martin, Jean-Paul et al
c/o CABINET LAVOIX 2, Place d'Estienne d'Orves
F-75441 Paris Cedex 09 (FR)**

## Description

La présente invention a pour objet un générateur de consigne pour la commande de position d'une pièce, notamment un ouvrant coulissant de véhicule automobile, ainsi qu'un dispositif de commande comprenant ce générateur et une chaîne d'asservissement de position.

On sait que les ouvrants coulissants de véhicules (vitres, toits ouvrants) sont souvent commandés par des actionneurs comportant un moteur électrique. Le plus souvent, ce moteur est commandé en tout ou rien par l'intermédiaire d'un interrupteur à disposition de l'utilisateur. Or, il s'avère difficile de régler finement la position de l'ouvrant, particulièrement au voisinage de la fermeture complète, en raison de la vitesse de fonctionnement qui est relativement rapide.

On a donc proposé divers dispositifs pour résoudre ce problème, notamment le FR-A 241571.1 qui décrit un générateur de consigne conforme au préambule de la revendication 1, mais aucun de ceux-ci ne permet l'obtention d'une précision suffisante et un réglage continu.

Suivant la partie caractérisante de la revendication 1, l'organe de réglage comprend un bouton de commande rotatif sans fin pouvant tourner d'un angle déterminé dont est directement fonction la position de la pièce, et des moyens générateurs d'impulsion en nombre proportionnel à l'angle de rotation du bouton et de comptage de ce nombre, ainsi qu'un sélecteur du sens de rotation, le calculateur étant programmé pour élaborer la consigne à partir du nombre des impulsions reçues en calculant le rapport entre ledit angle déterminé et un angle maximum accessible à un utilisateur, de la position de la pièce à commander et du sens de déplacement commandé.

Ce générateur de consigne, avantageusement complété par une chaîne d'asservissement ou de recopie de position continue ou quasi continue, permet d'obtenir un effet de "loupe" autorisant un réglage fin d'une manière continue ou quasi continue, avec une précision de réglage ramenée à l'erreur, très faible, du dispositif de recopie de position.

selon d'autres particularités, l'organe de réglage comprend :
   – un boîtier contenant le bouton de commande et présentant une fenêtre par laquelle une partie du bouton fait saillie à l'extérieur du boîtier sur un angle correspondant à la largeur de la fenêtre, une rotation du bouton de cet angle pouvant commander la course maximum de la pièce,
   – un axe disposé dans le boîtier, sur lequel le bouton est monté rotatif et qui porte un élément de friction pouvant coopérer avec un interrupteur formant sélecteur du sens de rotation du bouton.

D'autres particularités et avantages de l'invention apparaîtront au cours de la description qui va suivre, faite en référence aux dessins annexés qui en illustrent un mode de réalisation à titre d'exemple non limitatif.

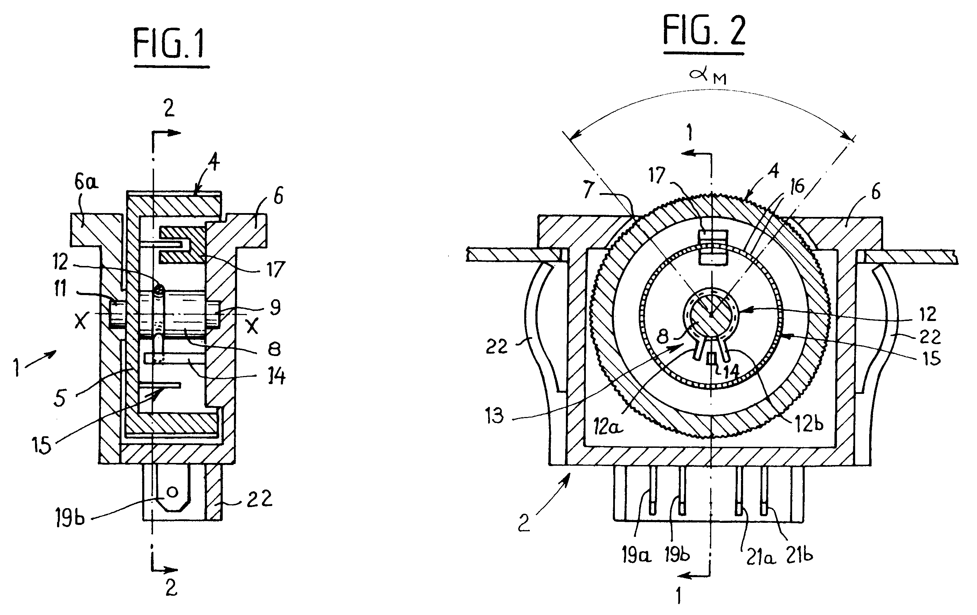

   – La Fig. 1 est une vue en coupe suivant 1-1 de la Fig. 2 d'une forme de réalisation du générateur de consigne selon l'invention ;
   – la Fig. 2 est une vue en coupe suivant 2-2 de la Fig. 1 ;
   – la Fig. 3 est une vue en élévation partielle agrandie du générateur de consigne des Fig. 1 et 2 ;
   – la Fig. 4 est un schéma synoptique de l'algorithme du logiciel du calculateur associé au générateur de consigne des Fig. 1 à 3 ;
   – la Fig. 5 est un schéma électrique d'une chaîne d'asservissement ou de recopie de position pouvant recevoir les données fournies pour le calculateur, associée à l'organe de réglage du générateur de consigne;
   – la Fig. 6 est une vue en perspective de l'organe de réglage du générateur de consigne selon l'invention;
   – la Fig. 7 est une vue en perspective d'un lève-glace de porte de véhicule, auquel peut être appliquée l'invention;
   – la Fig. 8 est un schéma développé d'une variante du générateur d'impulsions.

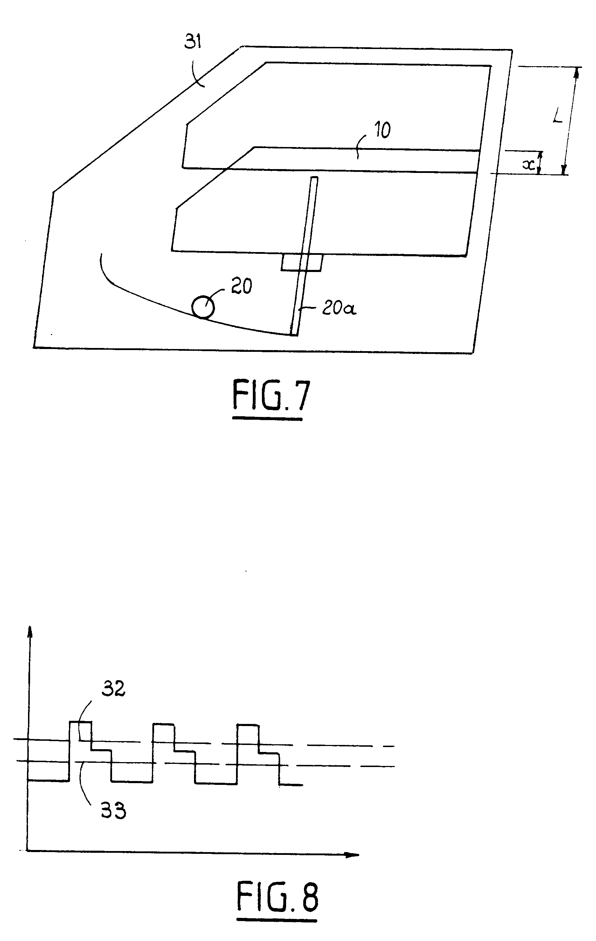

Le générateur de consigne illustré aux dessins est destiné à la commande de position d'une pièce non représentée, telle par exemple, mais non limitativement, un ouvrant coulissant de véhicule automobile (vitre 10 d'une porte 31, Figure 7).

Ce générateur 1 comprend un organe de réglage sans fin 2 et un calculateur associé 3, pourvus de moyens pour déterminer une proportion de trajet à parcourir par la pièce en fonction d'un ordre donné à l'organe de réglage 2 par rapport à des limites extrêmes de course de ladite pièce.

L'organe de réglage 2 comprend un bouton de commande 4 rotatif sans fin, à surface moletée, de forme cylindrique, fermé d'un côté par un fond 5 et ouvert de l'autre, de façon à constituer une sorte de cloche. Le bouton 4 est disposé dans un boîtier 6 qui présente une fenêtre latérale 7 par laquelle une partie du bouton 4 fait saillie à l'extérieur du boîtier 6 sur un angle $\alpha_M$ correspondant sensiblement à la largeur de la fenêtre 7, le sommet de cet angle se trouvant sur l'axe géométrique XX de rotation du bouton 4.

Cet axe géométrique est matérialisé par un axe 8 tourillonnant à ses deux extrémités dans des paliers 9, 11 logés dans une paroi du boîtier 6 et dans son couvercle 6a.

L'axe 8 porte un élément de friction 12, constitué dans l'exemple décrit par un ressort en forme de omega monté dans une gorge annulaire de l'axe 8 et dont les parties terminales 12a, 12b sont écartées d'une certaine distance angulaire. L'élément de friction 12 enserre l'axe 9 et peut coopérer avec un interrupteur électrique 13 formant sélecteur du sens de rotation du bouton 4. L'interrupteur 13 comporte deux contacts fixes 13a et 13b et deux contacts mobiles 13c et 13d, un contact fixe et un contact mobile étant disposés de chaque côté d'une tige flexible 14 de commande elle-même interposée entre les parties terminales 12a, 12b de l'élément de friction 12. Les contacts fixes 13a, 13b, mobiles 13c, 13d et la tige 14 sont montés sur la paroi intérieure du boîtier 6.

L'organe d'affichage 2 est en outre pourvu de moyens générateurs d'impulsions en nombre proportionnel à l'angle de rotation du bouton 4, et de comptage de ce nombre par le calculateur 3. Dans l'exemple décrit, ces moyens comprennent une couronne crénelée 15 fixée au fond 5 ou moulée d'une pièce avec ce dernier, coaxialement à l'axe 8 et présentant donc sur sa périphérie une série de créneaux 16, ainsi qu'un photo-coupleur 17 fixé intérieurement au boîtier 4 et placé à cheval sur la couronne crénelée 15. Le photo-coupleur 17 est composé, de manière connue en soi, d'une diode électroluminescente et d'un phototransistor. Le photocoupleur 17 et l'interrupteur 13 sont électriquement reliés entre eux ainsi qu'au calculateur 3 et à une source de courant continu. Les contacts mobiles 13c, 13d sont ainsi reliés au photocoupleur 17 par une connexion 18 de transmission des impulsions, les contacts fixes 13a, 13b sont reliés au calculateur 3 par des connexions 19a, 19b. Le calculateur 3 est également connecté au photo-coupleur 17 par des liaisons 21a, 21b. Les connexions 19a, 19b véhiculent l'une ou l'autre les impulsions selon le sens de rotation. Les liaisons 21a, 21b assurent l'alimentation du photocoupleur 17 en courant continu. Les connexions 19a, 19b et 21a, 21b, traversent la paroi du boîtier 4, lequel peut être muni de languettes latérales 22 de fixation élastique sur un élément de console, d'accoudoir ou de planche de bord de véhicule, non représenté.

Il convient de noter que le bouton de commande 4 ne comporte pas de butée en rotation.

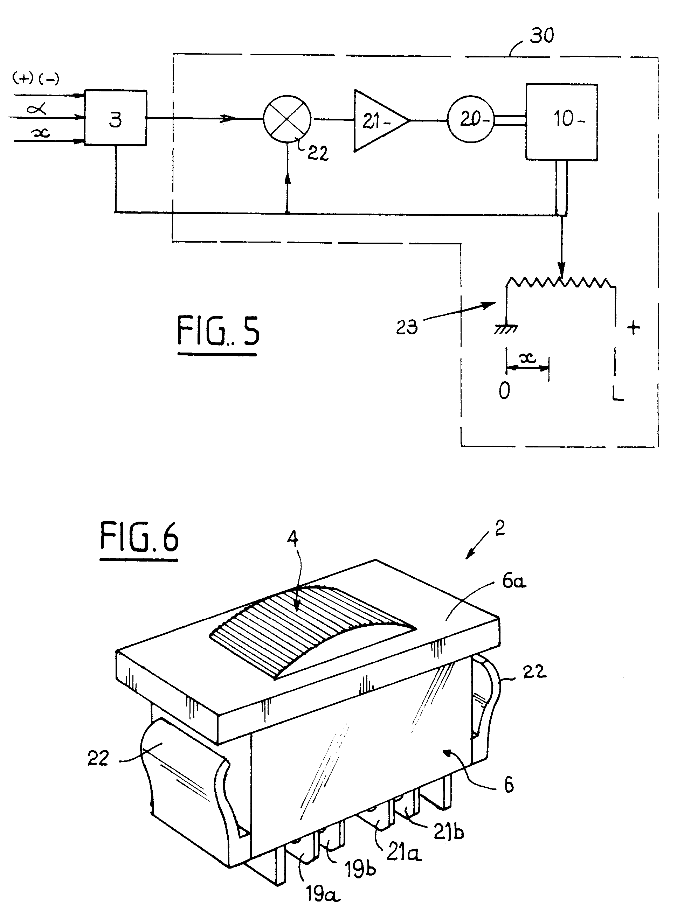

Le calculateur 3 est convenablement programmé de manière à pouvoir, à partir de la détection et du comptage des impulsions générées par le défilement des créneaux 16 de la couronne 15 dans le photo-coupleur 17, calculer une consigne C pour une chaîne d'asservissement ou de recopie de position, 30, illustrée à la Fig. 5. Cette chaîne de recopie de position comprend classiquement un moteur 20 d'entraînement de la pièce 10, un amplificateur 21 (proportionnel ou "tout ou rien"), un comparateur 22 et un élément de recopie 23 qui délivre une information correspondant à la cote de position x de la pièce 10 entre des limites O et L (par exemple la vitre 10, actionnée par le moteur 20 d'un lève-vitre électrique 20a, visible à la Figure 7).

Le dispositif de commande de la position d'une pièce qui vient d'être décrit permet de régler celle-ci de manière continue ou quasi continue par le dispositif de recopie de position de la Fig. 5, et son fonctionnement est le suivant.

$\alpha_M$ étant l'angle accessible à l'utilisateur laissé par la fenêtre 7, cet utilisateur tourne dans un sens ou dans l'autre le bouton moleté 4 d'un angle $\alpha$ inférieur ou égal à l'angle $\alpha_M$. Cette rotation entraîne les effets techniques suivants :

a) le défilement des créneaux 16 dans le photocoupleur 17 génère un nombre d'impulsions proportionnel à l'angle de rotation du bouton 4 et correspondant au nombre n de créneaux 16 ayant défilé entre les branches du photo-coupleur 17. A l'angle maximum $\alpha_M$ correspond un nombre N d'impulsions, et par conséquent le nombre n d'impulsions correspondant à l'angle $\alpha$ est également proportionnel à celui-ci, ce nombre étant transmis par le photo-coupleur 17 au calculateur 3.

b) L'élément de friction 12, entraîné par l'axe 8, tourne en même temps que le bouton 4, de sorte qu'en fonction de son sens de rotation, l'une de ses parties terminales 12a, 12b, actionne la tige 14 qui s'incline et ferme l'un des contacts électriques 13a, 13c ou 13b, 13d. Cette fermeture de l'interrupteur 13 intervient dès le début de la rotation du bouton de commande 4, l'élément 12 exerçant ensuite un frottement sur l'axe 8 qui continue à tourner tandis que l'élément 12 reste dans sa position angulaire de fermeture de l'interrupteur 13.

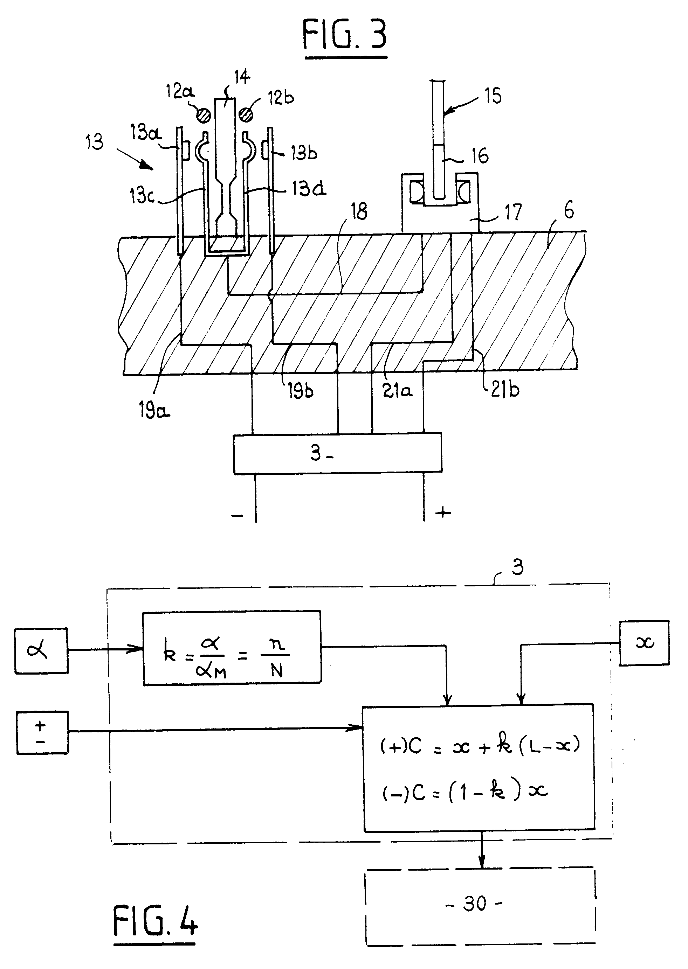

Le calculateur 3 est pourvu d'un logiciel permettant d'exécuter l'algorithme illustré à la Fig. 4. x étant la cote de position de la pièce à manoeuvrer par le moteur électrique 20, cette cote est comprise entre deux valeurs extrêmes O et L et est mesurée par le dispositif de recopie de position de la Fig. 5.

Selon que l'utilisateur désire accroître ou réduire la valeur x, il commande la rotation du bouton 4 dans un sens ou dans l'autre. Le calculateur 3 élabore en premier lieu le rapport k = $\alpha$ / $\alpha_M$ = n/N. Puis, le logiciel du calculateur 3 détermine de la manière suivante la consigne C en fonction du rapport k et du sens (plus ou moins) du déplacement commandé, auquel correspond une augmentation ou une diminution de la cote x entre les deux positions extrèmes O et L:

– si la cote initiale doit être diminuée, la consigne calculée par le logiciel est

$$C = (1 - k) x$$

– si la cote initiale doit au contraire être augmentée, la consigne élaborée par le logiciel est

$$C = k(L - x) + x$$

La valeur de la consigne C ainsi déterminée est enregistrée, transmise à la chaîne d'asservissement (30) et le moteur 20 de l'actionneur de la pièce 10 est mis en route jusqu'à ce que le dispositif de recopie de position 23 mesure une nouvelle valeur de x égale à la consigne C, à l'erreur près.

Ainsi le dispositif selon l'invention permet de régler, à partir de la rotation du bouton 4, la position de la pièce à manoeuvrer, proportionnellement au reste du trajet à effectuer pour atteindre ses limites O ou L. Pour obtenir la fermeture ou l'ouverture totale de la pièce commandée, l'utilisateur doit faire tourner le bouton 4 de la totalité de l'angle $\alpha_M$ accessible, et ce à partir d'une position quelconque de départ.

Au contraire, une succession de rotations partielles permet de régler la position de la pièce commandée aussi finement que l'utilisateur le désire, chaque manoeuvre étant ajustée proportionnellement au reste de trajet à effectuer.

Le mode de réalisation décrit peut faire l'objet de diverses variantes, notamment dans la technologie de la génération des impulsions, le photo-coupleur 17 pouvant être remplacé par des systèmes de contacts électriques, une sonde à effet Hall, ... connus en soi. De même, la sélection du sens de rotation peut être réalisée par un générateur d'impulsions double à deux canaux 32, 33 (Figure 8), de façon connue.

## Revendications

1. Générateur de consigne pour la commande de position d'une pièce, comportant un organe de réglage sans fin (2) et un calculateur (3) associé, pourvus de moyens (15, 9, 13) pour déterminer une proportion de trajet à parcourir par la pièce en fonction d'un ordre donné à l'organe de réglage (2) et par rapport à des limites extrêmes (O, L) de course de ladite pièce, caractérisé en ce que l'organe de réglage (2) comprend un bouton de commande (4) rotatif sans fin pouvant tourner d'un angle déterminé ($\alpha$), et des moyens ( 15, 17) générateurs d'impulsions en nombre (n) proportionnel à l'angle de rotation ($\alpha$) du bouton (4), de comptage de ce nombre, et de sélection du sens de rotation, le calculateur (3) étant programmé pour élaborer la consigne (C) dont est directement fonction la position de la pièce, à partir du nombre (n) des impulsions reçues en calculant le rapport (k) entre ledit angle déterminé ($\alpha$) et un angle maximum ($\alpha_M$) accessible à un utilisateur, de la position de la pièce à commander et du sens de déplacement commandé.

2. Générateur selon la revendication 1, caractérisé en ce que l'organe de réglage (2) comprend :
– un boîtier (6) contenant le bouton de commande (4) et présentant une fenêtre (7) par laquelle une partie du bouton (4) fait saillie à l'extérieur du boîtier (6) sur un angle ($\alpha_M$) correspondant à la largeur de la fenêtre (7), une rotation du bouton (4) de cet angle ($\alpha_M$) pouvant commander la totalité de la course restante de la pièce, à partir d'une position quelconque de départ;
– un axe (8) disposé dans le boîtier (6) sur lequel le bouton (4) est monté rotatif et sur lequel est placé un élément (12) pouvant coopérer avec un interrupteur (13) formant sélecteur du sens de rotation du bouton.

3. Générateur selon la revendication 2, caractérisé en ce que ledit élément (12) est monté à friction sur l'axe (8) et comporte deux parties terminales (12a, 12b) entre lesquelles est placée une tige de commande (14) portée par le boîtier (4) et associée à l'interrupteur (13), ce dernier étant formé par deux contacts fixes (13a, 13b) et deux contacts mobiles (13c, 13d) disposés de chaque côté de la tige de commande (14).

4. Générateur selon l'une des revendications 1 à 3, caractérisé en ce que le bouton de commande (4) est pourvu d'une couronne intérieure crénelée (15) dont le défilement devant un dispositif de détection et de comptage (17) crée des impulsions en nombre proportionnel à l'angle ( ) de rotation du bouton (4) et de la couronne crénelée (15).

5. Générateur selon les revendications 3 et 4, caractérisé en ce que le calculateur (3), associé au dispositif (17) de détection et de comptage des impulsions, est programmé pour déterminer le rapport k = n/N du nombre n d'impulsions enregistré au nombre N d'impulsions correspondant à l'angle maximum accessible ( M) puis, suivant le sens du déplacement commandé, la consigne C donnée à la cote initiale x de la pièce entre deux positions extrêmes O et L :
$$C = (1 - k)x$$
si la cote initiale doit être diminuée,
$$C = k(L - x) + x$$
si la cote initiale doit être augmentée.

6. Dispositif de commande de la position d'une pièce par réglage continu ou quasi-continu, caractérisé en ce qu'il comprend un générateur de consigne (1) selon l'une des revendications 1 à 5, et une chaîne d'asservissement (30) de position apte à recevoir la consigne (C) déterminée par le calculateur (3).

7. Utilisateur d'un générateur de consigne (1) selon l'une des revendications 1 à 5 pour la commande de position d'une pièce (10), notamment un ouvrant coulissant de véhicule automobile tel que lève-vitre ou toit ouvrant.

## Patentansprüche

1. Sollwertgeber für die Positionssteuerung eines Gegenstandes, bestehend aus einem Endloseinstellorgan (2) und einem zugeordneten Rechner (3), die mit Einrichtungen (15, 9, 13) zum Bestimmen einer Teilstrecke, die von dem Gegenstand zu durchlaufen ist, in Abhängigkeit von einem dem Einstellorgan (2) gegebenen Befehl und in Bezug auf Hubendstellungen (O,L) des Gegenstands versehen sind, dadurch gekennzeichnet, daß das Einstellorgan (2) einen endlos drehbaren Steuerknopf (4), der sich um einen bestimmten Winkel ($\alpha$) drehen kann, und Einrichtungen (15, 17) zur Erzeugung von Impulsen in einer zum Drehwinkel ($\alpha$) des Knopfs (4) proportionalen Anzahl (n), zum Zählen dieser Anzahl und zur Wahl der Drehrichtung besitzt, wobei der Rechner (3) programmiert ist, um den Sollwert (C), von dem die Stellung des Gegenstands direkt abhängig ist, aus der Anzahl (n) der empfangenen Impulse, indem das Verhältnis (k) zwischen diesem bestimmten Winkel($\alpha$) und dem für eine Bedienungsperson zugänglichen maximalen Winkel ($\alpha_M$) errechnet wird, aus der Stellung des zu steuernden Gegenstands und aus der eingegebenen Bewegungsrichtung zu ermitteln.

2. Geber nach Anspruch 1, dadurch gekennzeichnet, daß das Einstellorgan (2) besteht aus:

– einem Gehäuse (6), das den Steuerknopf (4) enthält und ein Fenster (7) aufweist, durch das ein Teil des Knopfs (4) über einen der Breite des Fensters (7) entsprechenden Winkel ($\alpha_M$) aus dem Gehäuse (6) herausragt, wobei eine Drehung des Knopfs (4) um diesen Winkel ($\alpha_M$) den gesamten verbleibenden Hub des Gegenstands aus einer beliebigen Ausgangsstellung heraus bewirken kann,

– einer in dem Gehäuse (6) angeordneten Achse (8), auf der der Knopf (4) drehbar montiert ist und auf der ein Element (12) sitzt, das mit einem Schalter (13) zusammenwirken kann, der einen Wähler der Drehrichtung des Knopfs bildet.

3. Geber nach Anspruch 2, dadurch gekennzeichnet, daß das Element (12) auf der Achse (8) reibend montiert ist und zwei Endteile (12a, 12b) besitzt, zwischen denen eine Betätigungsstange (14) angeordnet ist, die von dem Gehäuse (4) getragen ist und dem Schalter (13) zugeordnet ist, wobei dieser aus zwei feststehenden Kontakten (13a, 13b) und zwei beweglichen Kontakten (13c, 13d) besteht, die zu beiden Seiten der Betätigungsstange (14) angeordnet sind.

4. Geber nach einem der Ansprüche 1 bis 3, dadurch gekennzeichnet, daß der Steuerknopf (4) mit einem gezackten Innenring (15) versehen ist, dessen Vorbeilaufen an einer Fühl- und Zählvorrichtung (17) Impulse in einer zum Drehwinkel ($\alpha$) des Knopfs (4) und des gezackten Rings (15) proportionalen Anzahl erzeugt.

5. Geber nach den Ansprüchen 3 und 4, dadurch gekennzeichnet, daß der der Fühl- und Impulszählvorrichtung (17) zugeordnete Rechner (3) programmiert ist, um das Verhältnis k = n/N der aufgezeichneten Impulszahl n zu der dem zugänglichen maximalen Winkel ($\alpha_M$) entsprechenden Impulszahl N und anschließend den dem Ausgangsstand x des Gegenstands gegebenen Sollwert C zwischen zwei Endstellungen O und L je nach der Richtung der eingegebenen Bewegung zu bestimmen:

$$C = (1 - k)x,$$

wenn der Ausgangsstand verringert werden soll, und

$$C = k(L - x) + x,$$

wenn der Ausgangsstand erhöht werden soll.

6. Vorrichtung zur Positionssteuerung eines Gegenstands durch kontinuierliche oder quasi kontinuierliche Einstellung, dadurch gekennzeichnet, daß sie einen Sollwertgeber (1) nach einem der Ansprüche 1 bis 5 und eine Nachlaufsteuerkette (30) besitzt, die den durch den Rechner (3) bestimmten Sollwert (C) aufnehmen kann.

7. Verwendung eines Sollwertgebers (1) nach einem der Ansprüche 1 bis 5 für die Positionssteuerung eines Gegenstands (10), insbesondere einer Schiebeöffnung eines Kraftfahrzeugs wie eines Fensterhebers oder eines Schiebedachs.

## Claims

1. An instruction generator for controlling the position of an element, the generator comprising an endless adjusting means (2) and an associated computer (3) which have means (15, 9, 13) for determining a proportion of the path to be travelled by the element as a function of an instruction given to the adjusting means (2) and in relation to end-of-travel means (O, L) for said element, characterized in that the adjusting means (2) comprises an endless rotary control knob (4) adapted to rotate through a given angle ($\alpha$), and pulse generating means (15, 17) in a number (n) proportional to the angle of rotation ($\alpha$) of the knob (4), and means for counting said number and means for selecting the direction of rotation, the computer (3) being programmed to produce the instruction (C) of which the position of said element is a direct function, from the number (n) of pulses received by calculating the ratio (k) between said given angle ($\alpha$) and a maximum angle ($\alpha_M$) available to a user, from the position of the element to be controlled and from the direction of controlled displacement.

2. A generator according to claim 1, characterized in that the adjusting means (2) comprises:

– a casing (6) containing the control knob (4) and having an opening (7) through which a portion of the knob (4) projects outside the casing (6) over an angle ($\alpha_M$) corresponding to the width of the opening (7), a rotation of the knob (4) through said angle ($\alpha_M$) being able to control the whole of the remaining travel of the element from any starting position;

– a spindle (8) which is disposed in the casing (6) and on which the knob (4) is rotatably mounted and on which a member (12) is placed which is adapted to cooperate with a switch (13) forming a selector of the direction of rotation of the knob.

3. A generator according to claim 2, characterized in that said member (12) is frictionally mounted on the spindle (8) and comprises two end portions (12a, 12b) between which a control rod (14) is placed which is carried by the casing (6) and is associated with the switch (13), said switch being formed by two fixed contacts (13a, 13b) and two movable contacts (13c, 13d) disposed on each side of the control rod (14).

4. A generator according to one of claims 1 to 3, characterized in that the control knob (4) has an inner notched ring (15) whose movement in front of a detecting and counting device (17) creates pulses whose number is proportional to the angle of rotation ($\alpha$) of the knob (4) and of the notched ring (15).

5. A generator according to claims 3 and 4, characterized in that the computer (3) associated with the device (17) for detecting and counting the pulses is programmed to determine the ratio k = n/N between the number n of recorded pulses and the number N of pulses corresponding to the maximum available angle ($\alpha_M$) then, depending on the direction of the controlled displacement, the instruction C given to the initial dimension x of the element between two end positions O and L:

$$C = (1 - k)x$$

if the initial dimension must be reduced,

$$C = k(L - x) + x$$

if the initial dimension must be increased.

6. A device for controlling the position of an element by continuous or substantially continuous adjustment, characterized in that said device comprises an instruction generator (1) according to one of claims 1 to 5, and a closed loop position control (30) adapted to receive the instruction (C) determined by the computer (3).

7. Use of an instruction generator (1) according to one of claims 1 to 5, for controlling the position of an element (10), more particularly a sliding opening element of an automotive vehicle, such as a window glass raiser or an opening roof.

## FIG.1

## FIG. 2

$\alpha_M$

EP 0 323 291 B1

## FIG. 3

## FIG. 4

$$k = \frac{\alpha}{\alpha_M} = \frac{n}{N}$$

$$(+)C = x + k(L-x)$$

$$(-)C = (1-k)x$$

FIG..5

FIG.6

FIG.7

FIG.8